# EUROPEAN PATENT APPLICATION

(11) **EP 0 744 563 A2**
(43) Date of publication of application: **27.11.1996**
(21) Application number: 96108017.3
(22) Date of filing: 20.05.1996
(51) Int. Cl.: F16H 45/02, F16F 15/123

(54) **Damper device of lockup clutch**

(30) Priority: 23.05.1995 JP 123832/95
(71) Applicant: TOYOTA JIDOSHA KABUSHIKI KAISHA, Aichi-ken 471 (JP)
(72) Inventor: Shioiri, Hiroyuki, Susono-shi, Shizuoka-ken, 410-11 (JP); Kuramochi, Kojiro, Numazu-shi, Shizuoka-ken, 410 (JP); Murata, Kiyohito, Susono-shi, Shizuoka-ken, 410 (JP)
(74) Representative: KUHNEN, WACKER & PARTNER

(57) **Abstract**

Rivets (as a first connection portion) 18 shown in Fig. 3 connect a drive plate (as an input member) 6 which constitutes a lockup clutch 4, with an intermediate plate (as an intermediate member) 12 which transmits a torque between outer and inner damper springs (as outer diameter side and inner diameter side springs) 8 and 10. On the other hand, rivets (as a second connection portion) 22 connect the intermediate plate 12 with a driven plate (as an output member) 14. The rivets 18 and 22 are disposed at a part which is intermediate between the outer and inner damper springs 8 and 10 as viewed in the radial direction of the lockup clutch 4. Thus, the damper device of the lockup clutch has its size reduced, has its manufacture facilitated and has its durability enhanced.

## Description

The present invention relates to the damper device of a lockup clutch. More particularly, it relates to the damper device of a lockup clutch built in a torque converter for example, wherein the input member of the lockup clutch is elastically linked in its rotating direction with an output member through an outer diameter side spring, an inner diameter side spring, and an intermediate member for transmitting a torque between the springs.

In order to enhance the fuel consumption of a motor vehicle, a torque converter is provided with a lockup clutch. The lockup clutch connects an input member for receiving the output of an engine with an output member for delivering the engine output to a gear shift mechanism. The lockup clutch incurs a great shock due to a sudden torque change when the input and output members come into engagement. Moreover, it incurs vibrations attendant upon the torque fluctuation etc. of the engine while the motor vehicle is driven in the direct coupling state of the lockup clutch.

There have heretofore been known damper mechanisms each of which includes an outer diameter side spring, an inner diameter side spring and an intermediate member in order to absorb the sudden torque change and to improve the vibration characteristics of the motor vehicle during the direct coupling drive thereof.

It is effective to reduce the spring constants of the springs to obtain more superior vibration characteristics during the direct coupling drive. Meanwhile, however, each of the springs needs also to bear the maximum input torque from the engine. When the spring constant is merely set small, each spring becomes difficult to bear such a great input. Accordingly, a plurality of springs are combined in multistage fashion, thereby to establish a small spring constant in a low input torque region and a large spring constant in a high input torque region.

In each of the above damper mechanisms, the individual springs are all arranged in parallel. On the other hand, damper mechanisms in each of which springs are arranged in series in order to realize small-spring-constant characteristics have also been proposed in recent years.

By way of example, the official gazette of Japanese Patent Application Publication No. 7412/1987 discloses the damper device of a lockup clutch which comprises two sorts of springs on the outer side and inner side of the lockup clutch as viewed in the radial direction thereof, and in which the springs are arranged so as to entirely act in series with respect to an input torque.

In the case of adopting this damper device, however, there is such a problem that the length of the torque converter in the direction of the axis of rotation thereof increases to enlarge the size of the damper device.

The present invention has been made in order to solve the problems of the prior art, and has for its object to provide the damper device of a lockup clutch which can be reduced in size with its manufacture facilitated and its durability enhanced.

The present invention has achieved the above object by adopting a structure as defined in Claim 1.

By the way, here in this specification, the "connection portion" shall cover, not only a portion which connects the corresponding members quite fixedly with, e. g., rivets, but also a portion in which rivets or the likes are movable within, e. g., slots and connect the corresponding members with so-called "plays" of predetermined value. Further, the "connection portion" shall cover the aspect of performance in which the two members are connected directly or indirectly through other intervening members such as springs.

In operation, the input member of the lockup clutch built in a fluid transmission device is elastically linked in its rotating direction with the output member through the outer diameter side spring, the inner diameter side spring, and the intermediate member for transmitting the torque between the springs. Here in the present invention, the first connection portion for connecting the input member and the intermediate member, and the second connection portion for connecting the intermediate member and the output member, are arranged at the part which is intermediate between the outer diameter side spring and the inner diameter side spring as viewed in the radial direction of the lockup clutch.

Accordingly, in the case where the damper device according to the present invention is applied to the torque converter for example, it is permitted to arrange reasonably the two springs of the outer and inner diameter sides, and first and second connection portions. That is, in the part between a front cover and a turbine runner, there is a comparatively narrow space due to the curvature of the turbine runner, and comparatively large spaces on the outer peripheral side and inner peripheral side of the narrow space. According to the present invention, it is permitted to arrange the two springs of the outer and inner diameter sides in the comparatively large spaces. And, it is also permitted to arrange the first and second connection portions at the narrow space between the two springs. As a result, the vacancy of the torque converter can be effectively utilized especially in the radial direction of the lockup clutch, and the length of the whole torque converter in the direction of the axis of rotation thereof can be minimized.

Incidentally, in the case where the third connection portion for connecting the output member to the succeeding transmission member is arranged in the vicinity of the intermediate part between the outer diameter side spring and the inner diameter side spring, the succeeding transmission member need not be formed with any connection portion for its connection with the output member. Therefore, the shapes of those constituent components which lie on the inner diameter side with respect to the inner diameter side spring are simplified, and the vacancy of the torque converter can be effectively utilized.

Besides, in the case of the construction in which the first connection portion for connecting the input member and the intermediate member includes a stopper devices for restraining the outer diameter side spring so as not to flex more than a predetermined magnitude, and in which the second connection portion for connecting the intermediate member and the output member includes a stopper devices for restraining the inner diameter side spring so as not to flex more than a predetermined magnitude, the actions of excessive torques on the springs can be suppressed when the input torque has been received in the direct coupling state of the lockup clutch. Therefore, the durabilities of the springs can be enhanced.

Further, in the case where the output member is formed as the press-molded article with the bent portion, and where the third connection portion for connecting the output member to the succeeding transmission member is made by utilizing the bent portion of the output member, the manufacture of these members is facilitated, and a necessary rigidity is secured at low cost.

The above and other objects, features and advantages of the present invention will become more apparent from the following description of the invention taken in conjunction with the accompanying drawings, wherein like reference characters designate the same or similar parts, and wherein:
Fig. 1 is a partly-broken front view showing the damper device of a lockup clutch in an embodiment of the present invention;
Fig. 2 is a sectional view taken along line II - II indicated in Fig. 1;
Fig. 3 is a vertical sectional view showing the upper half of a torque converter which is equipped with the lockup clutch in the embodiment;
Fig. 4 is a graph showing the torsional characteristics of springs based on the embodiment;
Fig. 5 is a graph similar to Fig. 4, showing the torsional characteristics of springs based on the embodiment;
Figs. 6A and 6B are diagrams for explaining a torsional angle;
Fig. 7 is a front view showing the shape of an intermediate plate;
Figs. 8A and 8B are schematic front views for explaining the functional effect of the cutouts of a driven plate by comparison; and
Fig. 9 is a vertical sectional view showing the upper half of a torque converter which is equipped with a lockup clutch in another embodiment of the present invention.

Now, an embodiment of the present invention will be described in detail with reference to the drawings.

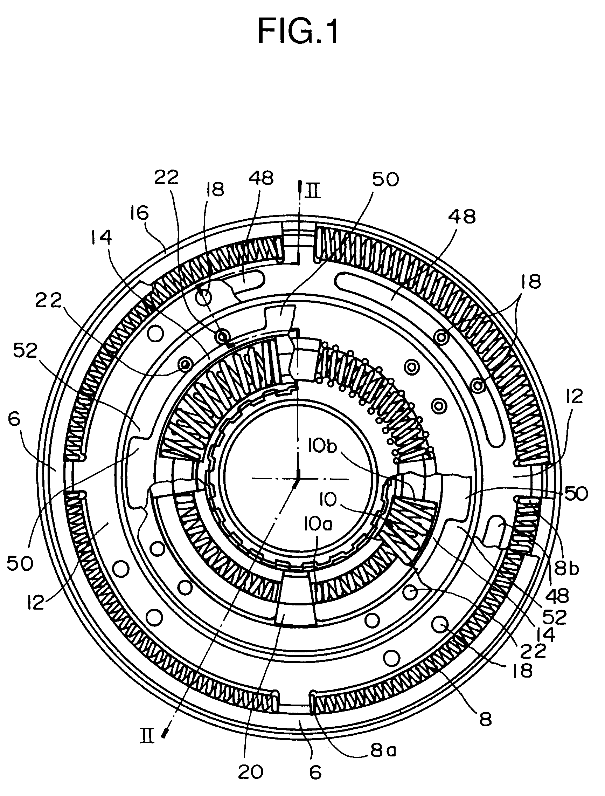

Figs. 1 thru 3 illustrate the damper device of a lockup clutch to which the present invention is applied.

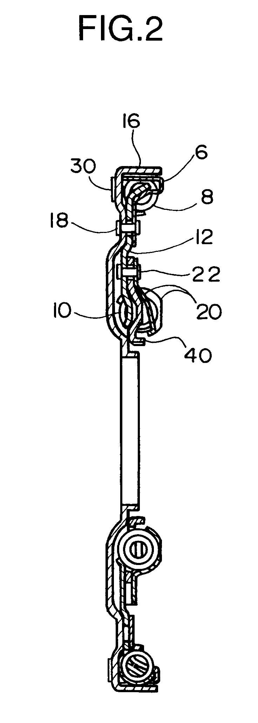

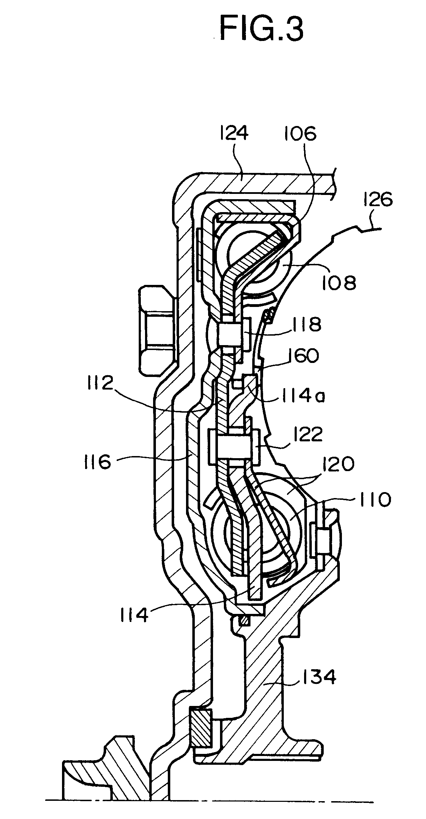

Fig. 1 is a partly-broken front view showing the damper device of the lockup clutch of a torque converter according to the present invention, while Fig. 2 is a sectional view of the damper device taken along line II - II indicated in Fig. 1. In addition, Fig. 3 is an enlarged vertical sectional view showing the upper half of the torque converter.

In this embodiment, the lockup clutch 4 built in the torque converter 2 has a drive plate (an input member) 6 and a driven plate (an output member) 14. Here in the damper device of the lockup clutch 4, the drive plate 6 is elastically linked in its rotating direction with the driven plate 14 through an outer damper spring (an outer diameter side spring) 8, an inner damper spring (an inner diameter side spring) 10, and an intermediate plate (an intermediate member) 12 for transmitting a torque between the springs 8 and 10.

Rivets (a first connection portion) 18 fix the drive plate 6 to a lockup piston 16 (serving also as a clutch plate), while rivets (a second connection portion) 22 fix the intermediate plate 12 and a spring guide plate 20 to each other. The rivets 18 and the rivets 22 are arranged at a part which is intermediate between the outer damper spring 8 and the inner damper spring 10 (as viewed) in the radial direction of the lockup clutch 4.

More specifically, as shown in Fig. 3, the interior part of the torque converter 2 between the front cover 24 and the turbine runner 26 thereof is narrow on account of the curvature of the turbine runner 26. The outer damper spring 8 and the inner damper spring 10 are respectively arranged in comparatively large spaces which correspond to the outer peripheral side and inner peripheral side (of the lockup clutch 4) in the radial direction thereof, with respect to the narrow interior part. The rivets 18 and 22 constituting the first and second connection portions, respectively, are arranged at the narrow part which lies between the springs 8 and 10. Therefore, the length of the torque converter 2 in the axial direction of the output shaft (not shown) thereof is diminished, and the size of the whole torque converter is reduced.

Also as shown in Fig. 3, the lockup piston 16 has an annular friction disc 30 which abuts against the clutch surface 28 of the front cover 24 in the direct coupling state of the lockup clutch 4 (that is, when the input shaft and output shaft of the torque converter 2 are directly coupled). Besides, a flange portion 32 formed at the inner side part of the lockup piston 16 is slidably mounted on the bearing portion 36 of a turbine hub 34, and the flange portion 32 is closed up tight by a seal 38.

The driven plate 14 is formed as a press-molded article with a bent portion 40 by perpendicularly curving its inner side part. The bent portion 40 is provided with a spline 42, which is held in engagement with the spline portion 44 of the turbine hub 34 (a succeeding transmission member). Thus, a third connection portion for connecting the driven plate 14 to the turbine hub 34 is constructed.

A spline 46 is provided at the inner side part of the turbine hub 34, and it is held in engagement with the input shaft of a gear shift mechanism not shown.

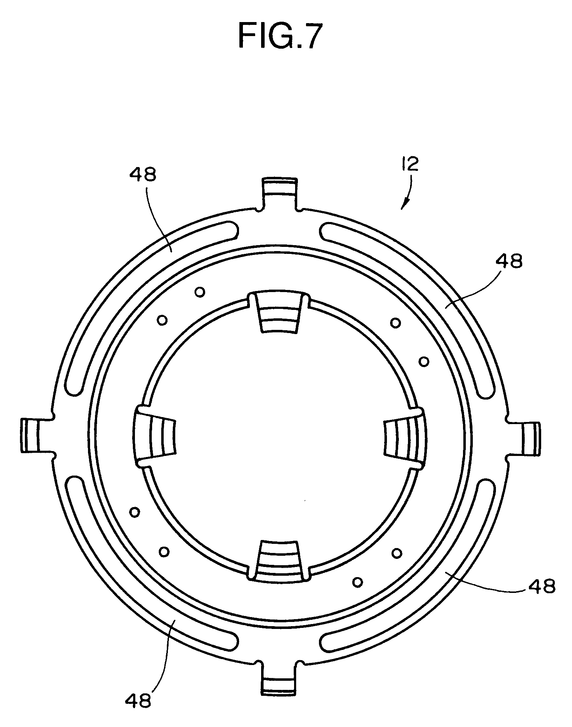

As best shown in Fig. 7, the intermediate plate 12 has a plurality of slots 48 each of which opens elongate depicting a circular arc. The rivets 18 fix the drive plate 6 to the lockup piston 16 through the slots 48. These rivets 18 can move only within the limits of the corresponding slots 48.

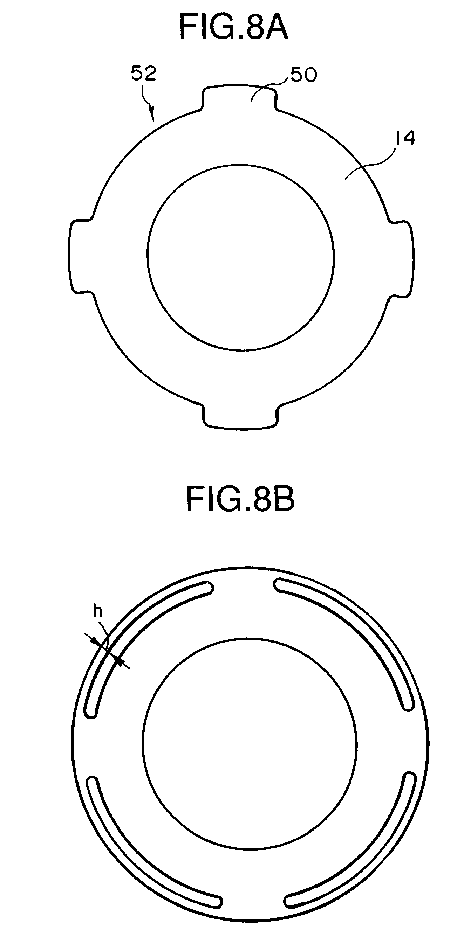

As best shown in Fig. 8A, the driven plate 14 has four lugs 50 which lie on a circumference, and cutouts 52 each of which opens on one side between the adjacent lugs 50. The rivets 22 can move only within the limits of the corresponding cutouts 52.

Now, the operation of this embodiment will be explained.

When the lockup piston 16 has axially moved to the direct coupling side thereof (leftwards as viewed in Fig. 3) till the abutment of the friction disc 30 against the clutch surface 28 which is the inside surface of the front cover 24 of the torque converter 2, then the direct coupling state (or coupling range) of the torque converter 2 is established. In the direct coupling state, the rotation of an engine (not shown) is directly transmitted through the lockup clutch 4. On this occasion, a shocking torque fluctuation acts from the lockup piston 16 onto the side of the turbine hub 34. The torque fluctuation, however, is absorbed by the damper device according to the present invention as stated below.

First, the input torque received by the lockup piston 16 is transmitted from the drive plate 6 united with this lockup piston 16 by the rivets 18, to the intermediate plate 12 through the outer damper spring 8.

This is because, assuming by way of example that the drive plate 6 rotates counterclockwise as viewed in Fig. 1, the drive plate 6 pushes one end 8a of the outer damper spring 8, the other end 8b of which pushes the intermediate plate 12. At this time, the rivets 18 for fixing the lockup piston 16 and the drive plate 6 move only within the corresponding slots 48 of the intermediate plate 12. When the rivets 18 have abutted against the ends of the corresponding slots 48, the lockup piston 16, drive plate 6 and intermediate plate 12 thereafter move unitarily.

Accordingly, the rivets 18 play the role of a stopper, which prevents the outer damper spring 8 from flexing more than a predetermined magnitude.

Subsequently, the intermediate plate 12 and spring guide plate 20 which are unitary through the rivets 22
push one end 10a of the inner damper spring 10. In consequence, the other end 10b of the inner damper spring 10 pushes the driven plate 14.

Thus, the torque is transmitted to the driven plate 14.

At this time, the rivets 22 move only within the limits of the cutouts 52 of the driven plate 14, the cutouts 52 being between the respectively adjacent lugs 50 thereof. After the rivets 22 have abutted against the corresponding lugs 50, the intermediate plate 12, spring guide plate 20 and driven plate 14 move unitarily. That is, the rivets 22 play the role of a stopper.

Since the rivets 18 and 22 are utilized as the stoppers in this manner, the damper device of the lockup clutch 4 is simplified in structure and is facilitated in manufacture. Also, excessive torques can be prevented from acting on the springs 8 and 10, so that the durability of the damper device can be enhanced.

Further, the outer damper spring 8 is arranged on the outermost peripheral side of the lockup clutch 4. Therefore, the outer damper spring 8 can have its stroke set long. Still further, the outer damper spring 8 and inner damper spring 10 are arranged in series, so that both of them can be set at small spring constants to satisfactorily absorb shocks.

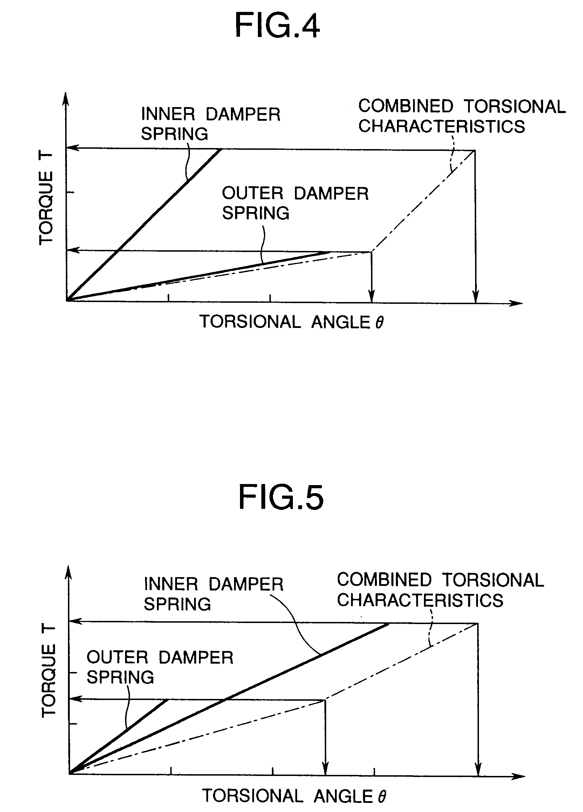

This merit will be elucidated with reference to the graphs of Figs. 4 and 5 each showing the torsional characteristics of the damper springs 8 and 10.

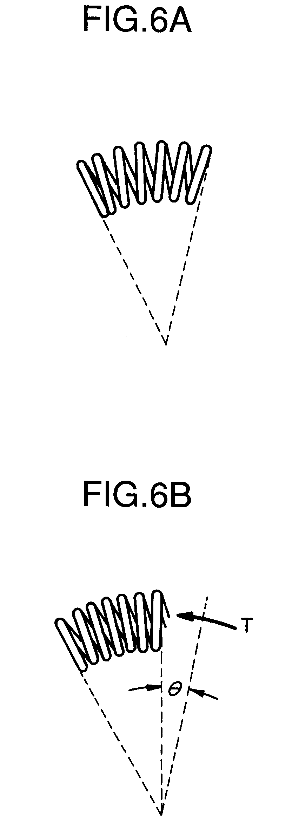

Here in Figs. 4 and 5, the expression "torsional angle θ" signifies the angle of flexure when a circularly arcuate spring is subjected under the action of a torque T as illustrated in Figs. 6A and 6B. As the spring constant is set smaller, the torsional angle θ becomes greater for a torque of predetermined small value.

In the example of Fig. 4, the spring constant of the outer damper spring 8 is set very small, and that of the inner damper spring 10 is set somewhat small, thereby to expand the combined torsional angle θ of both the springs 8 and 10.

On the other hand, the example of Fig. 5 corresponds to a case where the outer damper spring 8 is set somewhat small, and that of the inner damper spring 10 is set very small, thereby to expand the combined torsional angle θ of both the springs 8 and 10.

In this manner, the spring constant of the combined torsional characteristics can be made small by appropriately designing the individual springs 8 and 10. That is, the combined torsional angle θ is expanded, and the maximum torsional torque borne by both the damper springs 8 and 10 can be secured as being sufficiently great.

Owing to the spring constant of the combined torsional characteristics, accordingly, the drive region of a motor vehicle in which the lockup clutch 4 is direct coupled can be expanded up to a region of low engine speed. Thus, even in the drive region in which the motor vehicle has hitherto been driven by the fluid torque transmission (converter range) of a torque converter, not by the direct coupling (coupling range) thereof, this embodiment permits the motor vehicle to be driven in the direct coupling state of the torque converter 2 and can enhance the fuel consumption of the motor vehicle.

Referring back to Fig. 3, the torque transmitted to the driven plate 14 as stated before is further transmitted from the spline 42 provided in the bent portion 40 at the inner side part of the driven plate 14, to the turbine hub 34 through the spline portion 44 of this turbine hub 34. The torque thus transmitted is finally delivered from the spline 46 of the turbine hub 34 to the input shaft of the gear shift mechanism (not shown).

Here, the driven plate 14 does not have slots of circularly arcuate shape as shown in Fig. 8B, but it has the cutouts 52 which open outwards as shown in Fig. 8A referred to before. In the case of the slot shape of a driven plate as shown in Fig. 8B, a part indicated by letter h in the figure needs to be about three times greater than the thickness of the driven plate, so that the space of the driven plate in the diametrical direction thereof increases. In contrast, according to the cutout shape of this embodiment as shown in Fig. 8A, the lugs 50 can ensure a sufficient rivet arrangement space (space for arranging the second connection portion) without spoiling the stopper function of the rivets 22.

Furthermore, the bent portion 40 of the driven plate 14 is utilized as the constituent of the third connection portion for connecting this driven plate 14 to the turbine hub 34 which is the succeeding transmission member. It is therefore permitted to form the driven plate 14 as the press-molded article. Accordingly, the manufacture of the damper device is facilitated, and the necessary rigidity thereof can be attained.

Next, another embodiment of the present invention will be described.

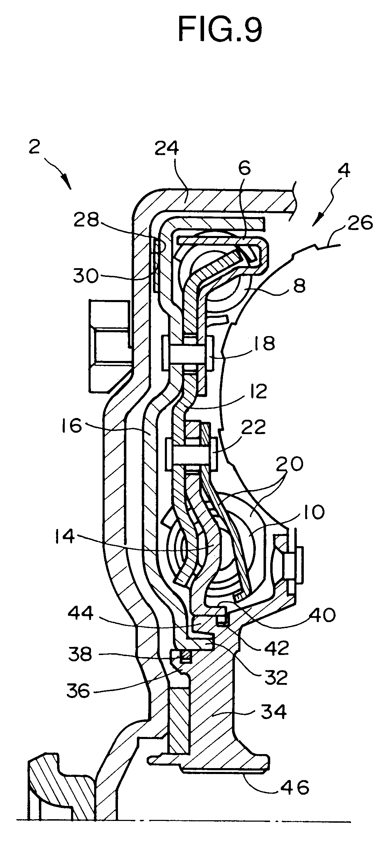

Fig. 9 is a vertical sectional view showing the upper half of a torque converter which is equipped with a lockup clutch in the other embodiment.

This embodiment differs from the foregoing embodiment in the place in which the torque is transmitted from a driven plate 114 to a turbine hub 134.

More specifically, in this embodiment, the driven plate 114 is not provided at its inner side part with the bent portion 40 as shown in Fig. 3. Instead, the outer side part 114a of the driven plate 114 is somewhat bent and extended toward a turbine runner 126. Besides, a pawl 160 is provided on the outer side of the central part of the turbine runner 126. The pawl 160 is held in engagement with the outer side part 114a of the driven plate 114, and the torque is transmitted from the outer side part 114a.

Since the remaining construction of this embodiment is similar to that of the foregoing embodiment, merely numerals each having the same two lower digits shall be assigned to similar parts in Fig. 9, without the repeated explanation of the similar parts.

In the case where the spline portion 44 is arranged as in the foregoing embodiment, the bearing portion 36 for the lockup piston 16 must be located on the still inner side (inner diameter side) with respect to the spline portion 44. Therefore, the inner circumference of the lockup piston 16 becomes small inevitably.

On the other hand, in this embodiment, the torque transmission to the turbine hub 134 is effected by the engagement of the driven plate 114 with the turbine runner 126 near the part which is intermediate between the outer and inner damper springs 108 and 110. Accordingly, the turbine hub 134 need not be formed with any spline portion, and the inner circumference of the lockup piston 116 can be set large.

Further, the vacancy of the torque converter can be more effectively utilized in such a manner that the inner diameter side damper spring 110 can be more enlarged in diameter. Accordingly, this embodiment can suppress unnecessarily large increase in the axial dimension of the lockup clutch and deteriorations in the controllability of the changeover between the direct coupling state and non-direct-coupling state of the lockup clutch, etc., the above increase and deteriorations being attendant upon increase in the magnitude of deformation in the movement of the lockup piston 16 included in the foregoing embodiment.

As described above, according to the present invention, the length of the whole torque converter in the direction of the axis of rotation thereof can be minimized, and the vacancy of the torque converter can be effectively utilized with the size thereof reduced.

## Claims

1. A damper device of a lockup clutch (4) in which an input member (6) of the lockup clutch (4) built in a fluid transmission means (2) is elastically linked in a rotating direction with an output member (14) through an outer diameter side spring (8), an inner diameter side spring (10), and an intermediate member (12) for transmitting a torque between said springs (8, 10), said damper device characterized in that:
a first connection portion (18) for connecting said input member (6) and said intermediate member (12), and a second connection portion (22) for connecting said intermediate member (12) and said output member (14) are arranged at a part which is intermediate between said outer diameter side spring (8) and said inner diameter side spring (10) as viewed in a radial direction of said lockup clutch.

2. A damper device of a lockup clutch (4) as defined in Claim 1, wherein said output member (14) includes a third connection portion (40) for connecting with a succeeding transmission member (34), and said third connection portion (40) is also arranged in the vicinity of said intermediate part between said outer diameter side spring (8) and said inner diameter side spring (10).

3. A damper device of a lockup clutch (4) as defined in Claim 1, wherein said first connection portion (18) for connecting said input member (6) and said intermediate member (12) includes stopper means (48) for restraining said outer diameter side spring (8) so as not to flex more than a predetermined magnitude, while said second connection portion (22) for connecting said intermediate member (12) and said output member (14) includes stopper means (52) for restraining said inner diameter side spring (10) so as not to flex more than a predetermined magnitude.

4. A damper device of a lockup clutch (4) as defined in Claim 2, wherein said output member (14) is formed as a press-molded article with a bent portion (40), and said third connection portion (40) for connecting said output member (14) to a succeeding transmission member (34) is made by utilizing said bent portion (40) of said output member (14).
